# EUROPÄISCHE PATENTSCHRIFT

(11) **EP 1 987 998 B1**
(45) Veröffentlichungstag und Bekanntmachung des Hinweises auf die Patenterteilung: **12.09.2012**
(21) Anmeldenummer: 08450063.6
(22) Anmeldetag: 24.04.2008
(51) Int. Cl.: B61B 12/10, F16D 67/06, F16D 67/02

(54) **Antriebsanordnung für Seilbahnen sowie Brems- und Kupplunseinheit hierfür**
Drive assembly for cableways and braking and coupling unit for the same
Agencement d'entraînement pour téléphériques et unité de freinage et d'embrayage correspondant

(30) Priorität: 24.04.2007 DE 202007006169 U
(43) Veröffentlichungstag der Anmeldung: 05.11.2008
(73) Patentinhaber: Innova Patent GmbH, 6960 Wolfurt (AT)
(72) Erfinder: Böhm, Peter, 59423 Unna (DE); Witt, Clemens, 59077 Hamm (DE); Müller, Thomas, 58089 Hagen (DE)
(74) Vertreter: Hehenberger, Reinhard

(56) Entgegenhaltungen:
- EP-A- 0 249 839
- DE-A1- 3 940 071
- DE-A1- 4 122 304
- GB-A- 674 624

## Beschreibung

Die Erfindung betrifft eine Antriebsanordnung für eine Seilbahn mit einer Hauptwelle, einem mit der Hauptwelle drehfest verbundenen Tragrad, einem mit der Hauptwelle drehfest verbindbarem Antriebsrad, vorzugsweise als Riemenscheibe ausgebildet, und einer schaltbaren Kupplung zur drehfesten Verbindung der Hauptwelle mit dem Antriebsrad. Weiterhin betrifft die Erfindung eine Brems- und Kupplungseinheit zur Montage an einer Hauptwelle einer Antriebsanordnung einer Seilbahn mit einem mit einem Antriebsdrehmoment beaufschlagbaren Antriebsabschnitt, einer mit der Hauptweile drehfest verbindbaren Nabe und einem ortsfest befestigbaren Basisabschnitt, wobei zwischen dem Antriebsabschnitt und der Nabe eine schaltbare Kupplung vorgesehen ist und zwischen dem Basisabschnitt und der Nabe eine schaltbare Bremse vorgesehen ist.

Aus der DE 41 33 304 A1 ist eine Kupplung/Brems-Einheit für eine Fadenliefervorrichtung für Textilmaschinen bekannt, bei der ein getriebener Drehteil über eine Bremse entweder mit einem ortsfesten Bauteil oder über eine Kupplung mit einer Antriebswelle verbunden werden kann.

Aus der GB 674 624 A ist eine hydraulisch aktivierte Kupplung oder Bremse bekannt, bei der eine Antriebswelle über eine Bremse mit einem ortsfesten Lagergehäuse oder über eine Kupplung mit einer Abtriebswelle verbunden werden kann.

Gattungsgemäße Antriebsanordnungen finden bei Seilbahnsystemen im Bereich der Seilbahnstationen Anwendung. Während die Seilbahngondeln zwischen den Stationen durch ein Zugseil oder ein kombiniertes Trag- und Zugseil angetrieben werden, werden sie innerhalb von Stationen durch gattungsgemäße Antriebsanordnungen angetrieben. Eine Vielzahl gattungsgemäßer Antriebsanordnungen ist zu diesem Zweck in einer Reihe angeordnet. Beim Einfahren in die Station setzen die Seilbahngondeln jeweils mit einem Tragabschnitt auf den Tragrädern der Antriebsanordnungen auf und werden durch diese angetrieben innerhalb der Station weitergefördert. Gleichzeitig wird in der Regel eine Verbindung mit dem Zugseil unterbrochen, so dass bei gleichzeitigem Weiterlaufen der anderen Gondeln der Seilbahn die in der Station befindliche Gondel verzögert werden kann, um ein Aussteigen und Einsteigen der Fahrgäste zu ermöglichen. Anschließend wird die Gondel durch die Tragräder wieder beschleunigt und schlussendlich wieder an das Zugseil angekoppelt. Die Tragräder der Antriebsanordnungen sind durch ein Antriebsrad, vorzugsweise eine Riemenscheibe, die über einen korrespondierenden Riemen angetrieben wird, antreibbar. Bei den aus dem Stand der Technik bekannten Antriebsanordnungen wird eine Entkopplung zwischen dem Tragrad und dem Antrieb durch eine schaltbare Zahn- oder Klauenkupplung hergestellt, um eine Gondel zum Zwecke des Anhaltens vom Antrieb der Antriebsanordnung zu entkoppeln. Beim Wiedereinkuppeln zum Zweck der Beschleunigung der Seilbahngondeln führen solche Zahn- oder Klauenkupplungen jedoch zu einem sehr harten Einkuppeln oder erfordern es, dass der Antrieb zuvor abgebremst werden muss, um ein sanftes Anlaufen zu ermöglichen. Diese Aspekte im Zusammenhang mit dem Einkuppeln werden als nachteilig angesehen.

Aufgabe der Erfindung ist es daher, eine Antriebsanordnung für eine Seilbahn und eine Kupplungs- und Bremseinheit für eine solche Antriebsanordnung zur Verfügung zu stellen, die einen vereinfachten und komfortableren Betrieb ermöglichen.

Diese Aufgabe wird durch eine gattungsgemäße Brems- und Kupplungseinheit zur Montage an einer Hauptwelle einer Antriebsanordnung einer Seilbahn nach dem Oberbegriff von Anspruch 1 erreicht, bei der die schaltbare Kupplung als Reibkupplung ausgebildet ist. Eine solche Reibkupplung ermöglicht es, dass die Hauptwelle und damit das Tragrad der Antriebsanordnung auch bei hohen Geschwindigkeiten des Antriebsabschnitts bzw. des mit dem Antriebsabschnitt verbunden Antriebsrades gekoppelt werden kann, ohne dass die auf dem Tragrad aufliegende Gondel in unbequemer Art und Weise schlagartig und hart beschleunigt wird. Statt dessen kann durch dosiertes Aufbringen einer Kupplungskraft ein langsam ansteigender Reibschluss zwischen dem Antriebsabschnitt und der Hauptwelle hergestellt werden, der den Anforderungen an einen komfortablen Personentransport gerecht wird. Insbesondere vorteilhaft ist es, dass der Antriebsabschnitt mit konstant hohen Drehzahlen laufen kann und zum Zwecke des Einkuppelns nicht verzögert werden muss. Typische Drehzahlen im Anwendungsfeld der erfindungsgemäßen Brems- und Kupplungseinheit liegen bei 50 bis 100 Umdrehungen/ Minute. Dies führt zu einer einfachen antriebsseitigen Ausgestaltung, bei der Antriebsanordnungen durch einen gemeinsamen Hauptantrieb angetrieben werden können, der alle Antriebsabschnitte gleichmäßig antreibt, ohne dass auf konkrete Betriebssituationen im Zusammenhang mit einfahrenden oder ausfahrenden Seilbahngondeln in Hinblick auf den Hauptantrieb besonders reagiert werden muss.

Der Antriebsabschnitt der Brems- und Kupplungseinheit ist vorzugsweise mit dem Antriebsrad verbindbar ausgebildet. Es sind jedoch auch Ausführungsformen von der Erfindung umfasst, bei denen der Antriebsabschnitt unmittelbar selbst das Antriebsrad umfasst, so dass das Antriebsrad Teil der Brems- und Kupplungseinheit ist.

Die drehfest mit der Hauptwelle verbindbare Nabe ist vorzugsweise einteilig ausgebildet, wobei sie aus mehreren Nabenabschnitten bestehen kann, die miteinander verbunden sind.

Die Brems- und Kupplungskombination weist vorzugsweise eine axial gegenüber dem Antriebsabschnitt und der Nabe bewegliche Ankerscheibe auf, die in einer ersten axialen Endlage einen Reibschluss der Bremse verursacht und in seiner zweiten Endlage einen Reibschluss der schaltbaren Kupplung verursacht. Bei einer solchen Ausgestaltung ist die Ankerscheibe demnach in Abhängigkeit ihrer axialen Lage sowohl für eine Bremswirkung auf die Hauptwelle als auch für eine Antriebswirkung auf die Hauptwelle verantwortlich. Es bedarf daher nur sehr einfacher Aktivierungsmittel zum Schalten der Kupplung und der Bremse, da nicht separate Aktivierungsmittel vorgesehen werden müssen. Darüber hinaus ist hierdurch auch gewährleistet, dass es nicht gleichzeitig zu einer Brems- und Antriebswirkung auf die Hauptwelle kommt. Der Reibschluss der Bremse wird vorzugsweise dadurch verursacht, dass die mit der Hauptwelle rotierende Ankerscheibe selbst gegen den feststehenden Basisabschnitt gedrückt wird. Es können am Basisabschnitt und/oder an der Ankerscheibe auch Reibbeläge vorgesehen sein, um hierdurch die Reibwirkung der Bremse gezielt zu beeinflussen. Im Hinblick auf die Kupplung ist eine Ausgestaltung denkbar, bei der auf der der Bremse abgewandten Seite der Ankerscheibe unmittelbar eine Reibfläche zum direkten Kontakt mit einer Reibfläche des Antriebsabschnitts vorgesehen ist.

Bevorzugt ist es jedoch, wenn die schaltbare Kupplung als Lamellenkupplung ausgebildet ist, wobei vorzugsweise die Außenlamellen drehfest mit dem Antriebsabschnitt und die Innenlamellen drehfest mit der Nabe verbunden sind und wobei vorzugsweise ein Betätigungsabschnitt der Ankerscheibe als Betätigungsmittel der Lamellenkupplung zur Aufbringung einer axial wirkenden Betätigungskraft auf die Lamellen ausgebildet ist. Durch die Verwendung einer Lamellenkupplung wird ein sehr kompakter Aufbau bei gleichzeitig hohen übertragbaren Drehmomenten erzielt. Die Betätigung erfolgt vorzugsweise dadurch, dass das Lamellenpaket von einem Betätigungsabschnitt der Ankerscheibe zusammengepresst wird.

Besonders bevorzugt ist eine erfindungsgemäße Brems- und Kupplungskombination, bei der die Nabe gegenüber dem Basisabschnitt axial fixiert ist, vorzugsweise dadurch, dass ein rotatives Lager zwischen der Nabe und dem Basisabschnitt vorgesehen ist, welches als Axiallager wirkt und auf Seite der Nabe und auf Seite des Basisabschnitts axial fixiert ist. Die Fixierung der Nabe gegenüber dem Basisabschnitt ist gemäß dieser Weiterbildung auch schon im nicht montierten Zustand der Brems- und Kupplungseinheit gegeben. Dies führt dazu, dass eine Voreinstellung der schaltbaren Bremse, insbesondere hinsichtlich ihres Luftspalts, von Seiten des Herstellers der Brems- und Kupplungseinheit möglich ist und nicht erst nach Einbau dieser Einheit nachgeholt werden muss. Weiterhin ist durch die angegebene Anordnung des rotativen Lagers auch keine Notwendigkeit gegeben, auf der Hauptwelle Ausgestaltung zur Aufnahme der Lager zwischen Basisabschnitte und Hauptwelle vorzusehen. Statt dessen muss die Hauptwelle nur mit der Nabe in drehfeste Verbindung gebracht werden, beispielsweise über eine Passfeder. Die axiale Relativlage zwischen Basisabschnitt und Hauptwelle oder zwischen der Nabe und der Hauptwelle ist für den Luftspalt der Bremse bedeutungslos. Eine Brems- und Kupplungseinheit gemäß dieser Weiterbildung stellt eine besonders vorteilhafte anbaufertige Einheit dar, die auf Seiten desjenigen, der die Einheit einsetzt, nur geringes technisches Können erfordert.

Die Bremse und die Kupplung können sowohl als Polradbremse bzw. als Polradkupplung ausgebildet sein, bei denen jeweils korrespondierende Metallflächen den Reibschluss herstellen. Sie können jedoch jeweils auch mit Brems- oder Kupplungsbelägen versehen sein, die eine gezielte Einflussnahme auf die Reibwirkung gestatten und darüber hinaus austauschbar gestaltet sein können.

Bei einer Weiterbildung der Erfindung sind die Reibscheiben oder Lamellen der Kupplung oder der Bremse aus nicht rostendem Stahl gefertigt oder weisen zumindest im Bereich von Reibflächen Abschnitte aus nicht rostendem Stahl auf. Eine derartige Gestaltung der Kupplung und der Bremse ist insbesondere im Zusammenhang mit Seilbahnfahrzeugen zweckmäßig, da die Verschleißgefahr durch eindringende Feuchtigkeit gerade in Skigebieten, in denen erfindungsgemäße Brems- und Kupplungseinheiten vorwiegend Anwendung finden werden, vergleichsweise hoch ist.

Besonders bevorzugt sind Brems- und Kupplungseinheiten, bei denen ein umlaufender Spaltbereich zwischen Antriebsabschnitt und Ankerscheibe, zwischen Ankerscheibe und Basisabschnitt und/oder zwischen Antriebsabschnitt und Basisabschnitt durch Dichtelemente und/oder Dichtgeometrien vor dem Eindringen von Verschmutzungen und Feuchtigkeit geschützt ist.

Eine solche Gestaltung der Spaltbereiche schafft einen wirksamen Schutz der vergleichsweise empfindlichen Komponenten der Bremse und Kupplung, ohne dass ein separates Gehäuse vorgesehen werden muss. Dies ist im Hinblick auf Baugröße und Herstellungskosten von Vorteil. Die Dichtgeometrien werden vorzugsweise durch die Formgebung der Bauteile, also des Antriebsabschnitts, des Basisabschnitts und/oder der Ankerscheibe erzielt. Diese Formgebung umfasst vorzugsweise umlaufende Nuten und Stege, die gemeinsam wie als Labyrinthdichtung wirken. Je nach konkreten Einsatzbedingungen ist an einer solchen Labyrinthdichtung besonders vorteilhaft, dass sie das Ablaufen von Kondenswasser und zuvor eingedrungenem Wasser nicht verhindert, da sie nicht flüssigkeitsdicht ausgebildet ist.

Insbesondere zwischen zueinander drehbeweglich ausgestalteten Bauteilen, wie beispielsweise im Übergangsbereich zwischen Antriebsabschnitt einerseits und Basisabschnitt oder Ankerscheibe andererseits, wird eine Dichtgeometrie als vorteilhaft angesehen, bei der in einem der Bauteile eine in axialer Richtung offenen Nut und am gegenüberliegenden Bauteil ein umlaufender Steg vorgesehen ist, der in die axiale Nut eingreift. Zusammen bilden die Nut und der Steg dann eine Labyrinthdichtung, die wirksam das Eindringen von Verschmutzungen verhindern kann. Eine Steigerung der Sicherheit ist durch das Vorsehen mehrerer Nuten und Stege möglich. Zusätzlich oder alternativ können auch elastische Dichtelemente zwischen den zueinander drehbeweglichen Bauteilen vorgesehen sein.

Eine alternative Dichtgeometrie sieht vor, dass an einem ersten Bauteil ein sich axial erstreckender umlaufender Dichtkragen vorgesehen ist, der eine Umfangsfläche zu einem zweiten Bauteil zum Zwecke der Abdichtung eines dazwischenliegenden Spaltes zumindest teilweise abdeckt, wobei vorzugsweise zwischen der Umfangsfläche des zweiten Bauteils und dem Dichtkragen ein umlaufendes Dichtelement vorgesehen ist. Der Dichtkragen ist vorzugsweise als separates Bauteil ausgebildet und mit dem ersten Bauteil verbunden. Er kann am ersten Bauteil jedoch auch einstückig angeformt sein. Der umlaufende und sich axial erstreckende Spalt zwischen der Umfangsfläche des zweiten Bauteils und dem Dichtkragen kann durch ein umlaufendes Dichtelement, wie beispielsweise durch einen Filzstreifen, wirksam abgedichtet werden.

Vorzugsweise ist eine erfindungsgemäße Brems- und Kupplungseinheit derart ausgebildet, dass die Bremse und die schaltbare Kupplung über ein gemeinsames Aktivierungsmittel schaltbar sind, wobei das Aktivierungsmittel vorzugsweise eine elektromagnetisch wirkende Spule ist. Besonders einfach ist dies realisierbar, wenn in oben beschriebener Art und Weise eine durch die Spule in ihrer Lage beeinflussbare Ankerscheibe vorgesehen ist, die abhängig von ihrer gerade eingenommenen axialen Endlage sowohl die Bremswirkung als auch die Kupplungswirkung verursacht. In eine der Bewegung der Ankerscheibe durch Aktivierung des Aktivierungsmittels entgegengesetzte Richtung wird die Ankerscheibe vorzugsweise durch Federelemente kraftbeaufschlagt.

Das Aktivierungsmittel ist vorzugsweise derart ausgestaltet, dass es in einem aktivierten Zustand eine Entkopplung der Kupplung und eine Aktivierung der Bremse und in einem deaktivierten Zustand eine Koppelung der Kupplung und eine Lüftung der Bremse bewirkt. Eine Aktivierung des Aktivierungsmittels, beispielsweise durch Bestromung, ist daher nur erforderlich, wenn der entkoppelte Zustand erreicht werden soll. Dies ist im Falle der erfindungsgemäßen Anwendung bei einer Seilbahn dann gegeben, wenn eine Gondel abgebremst werden soll, Eine Bestromung bzw. anderweitige Aktivierung des Aktivierungsmittels ist bei dieser Weiterbildung daher nur dann erforderlich, wenn es zu einem Abbremsen der Gondel kommen soll.

Die Erfindung betrifft auch eine gattungsgemäße Antriebsanordnung für eine Seilbahn mit den Merkmalen des Anspruchs 14.

Dabei ist vorzugsweise zusätzlich eine Reibbremse vorgesehen, wobei die Reibkupplung und die Reibbremse insbesondere vorzugsweise als gemeinsame Brems- und Kupplungseinheit der oben beschriebenen Art ausgebildet sind.

Besonders bevorzugt ist dabei eine Ausgestaltung, bei der das Antriebsrad unmittelbar mit dem Antriebsabschnitt der Kupplung drehfest verbunden ist. Kurzbeschreibung der Zeichnungen Weitere Vorteile und Merkmale der Erfindung ergeben sich aus den Ansprüchen sowie der nachfolgenden Beschreibung eines bevorzugten Ausführungsbeispiels der Erfindung, das anhand der Zeichnungen dargestellt ist. Dabei zeigt:
Fig. 1 eine erfindungsgemäße Brems- und Kupplungseinheit in einer geschnitten Darstellung und
Fig. 2 die Brems- und Kupplungseinheit der Fig. 1 in ihrer bestimmungsgemäßen Einbausituation. Detaillierte Beschreibung des Ausführungsbeispiels

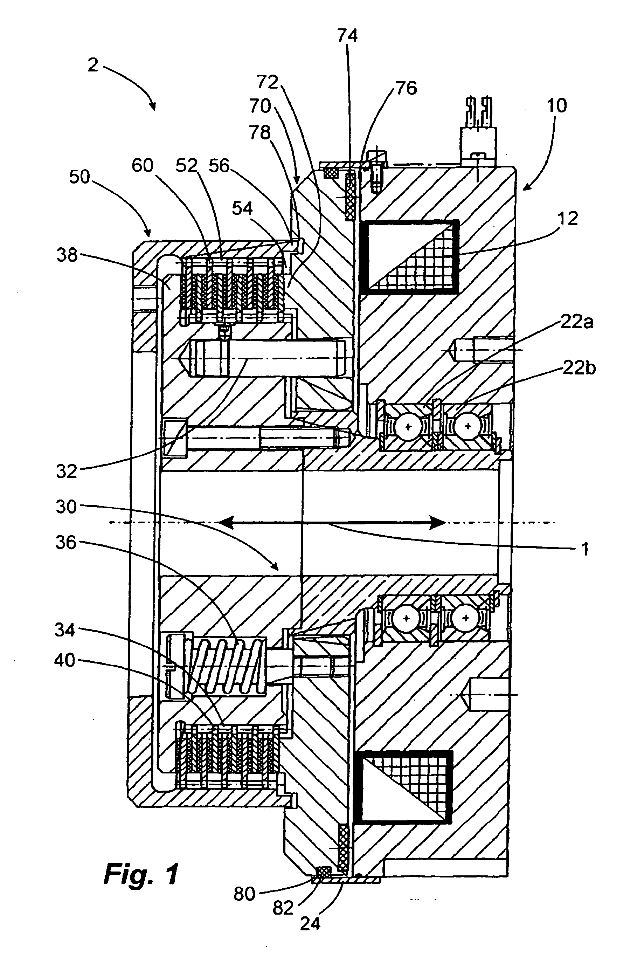

Fig. 1 zeigt eine erfindungsgemäße Brems- und Kupplungseinheit 2. Die Brems- und Kupplungseinheit 2 weist vier zueinander retativbewegliche Hauptbaugruppen auf. Diese Hauptbaugruppen umfassen - einen Basisabschnitt 10, der zur ortsfesten Befestigung beispielsweise an einem für eine Vielzahl gattungsgemäße Antriebsanordnungen vorgesehenen Träger ausgebildet ist, - eine Nabe 30, die zur drehfesten Verbindung mit einer nicht dargestellten Hauptwelle ausgebildet ist, - einen Antriebsabschnitt 50, der zur drehfesten Verbindung mit einem nicht dargestellten Antriebsrad vorgesehen ist, sowie - eine Ankerscheibe 70, die zwischen dem Basisabschnitt 10 einerseits und dem Antriebsabschnitt 50 und der Nabe 30 andererseits angeordnet ist.

Zwischen dem Basisabschnitt 10 und der zweiteilig ausgebildeten Nabe 30 ist eine Lageranordnung mit zwei Kugellagern 22a, 22b vorgesehen, wobei die Kugellager mittels Sicherungsringen in einer jeweils axial definierten Lage gehalten werden, so dass in axialer Richtung 1 der Basisabschnitt und die Nabe 30 eine definierte und unveränderliche Lage zueinander aufweisen. Der Basisabschnitt 10 und die Nabe 30 sind jedoch um die Hauptachse 1 zueinander drehbeweglich.

Die Ankerscheibe 70 ist durch Zylinderstifte 32 gegenüber der Nabe 30 in einer drehfesten Lage gehalten. Die Ankerscheibe 70 ist jedoch, geführt durch die Zylinderstifte 32, in axialer Richtung 1 gegenüber der Nabe 30 und dem Basisabschnitt 10 translativ beweglich.

An der Außenseiten der Nabe 30 sind, durch axiale Stege 34 drehfest gesichert, insgesamt fünf nach außen weisende Innenlamellen 40 aufgeschoben, die gegenüber der Nabe30 begrenzt translativ, nicht aber rotativ beweglich sind. Korrespondierend zu den Innenlamellen 40 sind am Antriebsabschnitt 50 nach innen weisende Außenlamellen 60 vorgesehen, die ebenfalls mittels axialer Stege 52 drehfest mit dem Antriebsabschnitt 50 verbunden sind. In dem in Fig.1 dargestellten Lieferzustand bilden die Innenlamellen 40 und die Außenlamellen 60 bereits ein Lamellenpaket mit wechselnder Anordnung von Innenlamellen 40 und Außenlamellen 60. Im Lieferzustand ist der Antriebsabschnitt 50 gegenüber der Nabe 30 in keiner definierten Lage. Die Koaxialität wird erst mit der Montage des Antriebsabschnitts 50 an einem Antriebsrad hergestellt.

Die Ankerscheibe 70 ist gegenüber dem Basisabschnitt 10 und der Nabe 30 axial translativ beweglich. In dem dargestellten Lieferzustand wird die Ankerscheibe 70 durch Schraubenfedern 36 in Richtung des Antriebsabschnitts 50 und der Nabe 30 gezogen. Die dadurch erzielte und in Fig.1 dargestellte axiale Endlage der Ankerscheiben 70 geht damit einher, dass ein Betätigungsabschnitt 72 der Ankerscheiben 70 axial auf das Lamellenpaket, bestehend aus Innenlamellen 40 und Außenlamellen 60, drückt und dieses gegen einen Gegenabschnitt 38 der Nabe 30 presst. Dieser Zustand stellt den Kupplungszustand dar, in dem die Nabe 30 und der Antriebsabschnitt 50 zueinander drehfest sind.

Zum Lösen dieses Kupplungszustandes ist im Basisabschnitt 10 eine Spule 12 vorgesehen, die bei Bestromung mittels eines Magnetfeldes die Ankerscheibe 70 entgegen der Federkraft der Federn 36 in Richtung des Basisabschnitts 10 zieht. Hierdurch wird ein Lösen der Kupplung bewirkt, da der Betätigungsabschnitt 72 der Ankerscheibe 70 nicht mehr auf das Lamellenpaket aus den Lamellen 40,60 drückt. Allerdings kommt auf der Gegenseite ein Reibschluss zwischen der Ankerscheibe 70 und dem Basisabschnitt 10 zustande, wobei auf Seiten der Ankerscheibe 70 ein Reibbelag 74 vorgesehen ist, der dabei zur Anlage an den Basisabschnitt 10 kommt. Hierdurch wird ein Reibschluss zwischen Ankerscheibe 70 und Basisabschnitt 10 hervorgerufen, der zu einem Abbremsen der Ankerscheibe 70, der Nabe 30 sowie damit der in Fig. 1 nicht dargestellten Hauptwelle führt.

Sobald die Bestromung der Spule 12 entfällt, wird die Ankerscheibe 70 von den Schraubenfedern 36 wiederum in Richtung des Antriebsabschnitts 50 gezogen und verursacht dadurch wiederum den Reibschluss in der Kupplung.

Um das Eindringen von Schmutz zu verhindern, sind Spalten 54, 76 zwischen Antriebsabschnitt 50 und Ankerscheibe 70 bzw. zwischen Ankerscheibe 70 und Basisabschnitt 10 jeweils besonders geschützt. Der Spaltbereich 54 zwischen dem Antriebsabschnitt 50 und der Ankerscheibe 70 ist durch eine Labyrinthdichtung geschützt, die aus einer umlaufenden und in axialer Richtung offenen Nut 78 in der Ankerscheibe 70 sowie einem korrespondierenden in die umlaufende Nut 78 eingreifenden Steg 56 des Antriebsabschnitts 50 gebildet wird.

Im Spaltbereich 76 zwischen der Ankerscheibe 70 und dem Basisabschnitt 10 ist ein Schutzkragen 24 vorgesehen, der am Basisabschnitt 10 befestigt ist und der über die Ankerscheibe 70 hinausragt. Ein Spalt 80 zwischen der Ankerscheibe 70 und dem Schutzkragen 24 wird durch einen Filzstreifen 82 geschlossen.

Durch diese Dichtungselemente und Geometrien zwischen Antriebsabschnitt 50, Ankerscheibe 70, Basisabschnitt 10 ist gewährleistet, dass die Menge an eindringender Verunreinigung und/oder Feuchtigkeit auf ein Minimum reduziert wird. Gleichzeitig bedarf es hierzu keiner darüber hinausgehenden Maßnahmen wie beispielsweise einem einheitlichen Schutzgehäuse, welches die Handhabung erschweren, die Baugröße vergrößern und den Fertigungsaufwand erhöhen würde.

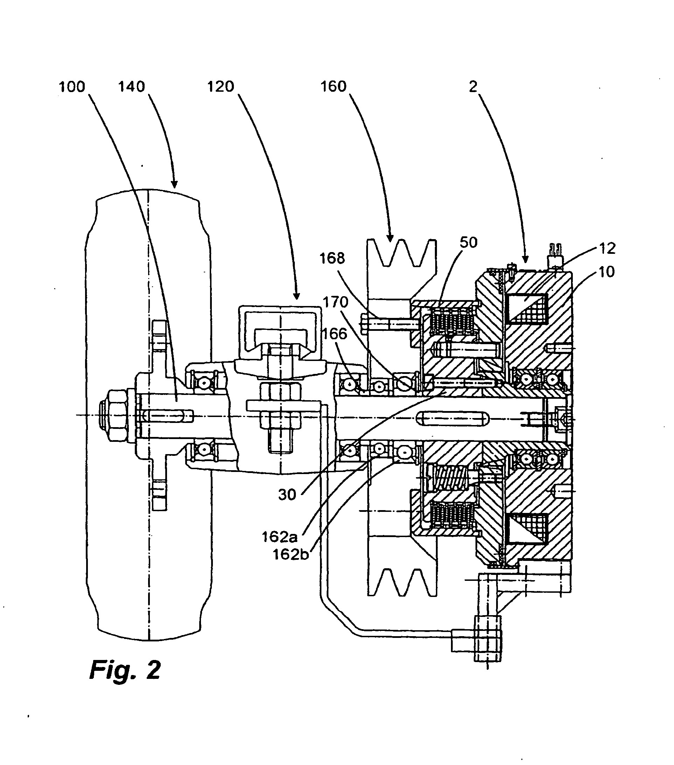

Fig.2 zeigt die Brems- und Kupplungseinheit 2 der Fig. 1 in ihrer Einbausituation im Kontext einer vollständigen Antriebsanordnung für eine Seilbahn. Neben der Brems- und Kupplungseinheit 2 umfasst diese Antriebsanordnung noch eine Hauptwelle 100, eine ortsfeste Führungshülse 120 für die Hauptwelle 100 sowie auf einer Seite der Führungshülse 120 ein Tragrad 140 und auf der gegenüberliegende Seite der Führungshülse 120 ein als Riemenscheibe ausgebildetes Antriebsrad 160.

Das Tragrad 140 ist drehfest mit der Hauptwelle 100 verbunden. Das Antriebsrad 160 hingegen ist mittels zweier Kugellager 162a, 162b gegenüber der Hauptwelle 100 drehbar ausgebildet. Die axiale Lage des Antriebsrads 160 gegenüber der Führungshülse 120 wird durch eine erste Distanzhülse 166 gewährleistet, die auf die Hauptwelle 100 aufgeschoben ist.

Zwischen dem Kugellager 162b und der Nabe 30 ist eine zweite Distanzhülse 170 vorgesehen. Diese führt zu einer definierten Beabstandung zwischen Nabe 30 und Riemenscheibe 160. Da der Antriebsabschnitt 50 mittels Schrauben 168 an der Riemenscheibe 160 in definierter Lage angebracht ist, wird damit auch eine definierte Axiallage zwischen Nabe 30 und Antriebsabschnitt 50 erreicht, so dass darüber hinausgehende Einstellungen zur Ausrichtung der durch die Kupplung koppelbaren Bauteile nicht erforderlich sind.

In nicht dargestellter Art und Weise ist der Basisabschnitt 10 der Brems- und Kupplungseinheit 2, beispielsweise an einem hierfür vorgesehenen Träger, ortsfest befestigt.

Nach der Anbringung des Antriebsabschnitts 50 an der Riemenscheibe 160 und der Anbringung des Basisabschnitts 10 an dem dafür vorgesehenen Träger sind keine weiteren Einstellungsarbeiten mehr zu verrichten.

Die Brems- und Kupplungseinheit 2 erlaubt in ihrer bestimmungsgemäßen Einbausituation, die in Fig.2 dargestellt ist, durch Bestromung der Spule 12 eine Entkoppelung des Antriebsrades 160 von der Hauptwelle 100 und nachfolgend ein Abbremsen der Hauptwelle 100 und damit des Tragrades 140. Bei Wegfall der Bestromung entfällt die Bremswirkung und die Lamellenkupplung wird in ihren gekuppelten Zustand überführt, in dem durch Reibschluss eine Momentenübertragung zwischen Antriebsrad 160 und Tragrad 140 über die Hauptwelle 100 stattfindet.

Im Betrieb werden die Antriebsanordnungen nach dem Einfahren einer Seilbahngondel in die Station zunächst durch Bestromung der Spule 12 entkoppelt und abgebremst, bis die Seilbahngondel Stillstand oder eine gewünschte Ein- und Aussteigegeschwindigkeit erreicht hat. Anschließend wird die Hauptwelle 100 mit dem Tragrad 140 durch Wegfall der Bestromung der Spule 12 wieder an das Antriebsrad 160 angekoppelt, so dass es die abfahrbereite Seilbahngondel wieder beschleunigt.

## Patentansprüche

1. Brems- und Kupplungseinheit (2) zur Montage an einer Hauptwelle (100) einer Antriebsanordnung einer Seilbahn mit einem mit einem Antriebsdrehmoment beaufschlagbaren Antriebsabschnitt (50), einer mit der Hauptwelle (100) drehfest verbindbaren Nabe (30) und einem ortsfest befestigbaren Basisabschnitt (10), wobei zwischen dem Antriebsabschnitt (50) und der Nabe (30) eine schaltbare Kupplung (40, 60) vorgesehen ist und zwischen dem Basisabschnitt (10) und der Nabe (30) eine schaltbare Bremse vorgesehen ist, **dadurch gekennzeichnet, dass** die schaltbare Kupplung (40, 60) als Reibkupplung (40, 60) ausgebildet ist.

2. Brems- und Kupplungseinheit nach Anspruch 1, **dadurch gekennzeichnet, dass** die Nabe (30) einteilig ausgebildet ist.

3. Brems- und Kupplungs einheit nach einem der vorstehenden Ansprüche, **gekennzeichnet durch** eine axial gegenüber dem Antriebsabschnitt (50) und der Nabe (30) bewegliche Ankerscheibe (70), die in einer ersten axialen Endlage einen Reibschluss der Bremse verursacht und in einer zweiten axialen Endlage einen Reibschluss der schaltbaren Kupplung (40, 60) verursacht.

4. Brems- und Kupplungs einheit nach einem der vorstehenden Ansprüche, **dadurch gekennzeichnet, dass** die schaltbare Kupplung (40, 60) als Lamellenkupplung (40, 60) ausgebildet ist, wobei die Außenlamellen (60) drehfest mit dem Antriebsabschnitt (50) und die Innenlamellen (40) drehfest mit der Nabe (30) verbunden sind und wobei ein Betätigungsabschnitt (72) der Ankerscheibe (70) als Betätigungsmittel der Lamellenkupplung (40, 60) zur Aufbringung einer axial wirkenden Betätigungskraft auf die Lamellen (40, 60) ausgebildet ist.

5. Brems- und Kupplungs einheit nach einem der vorstehenden Ansprüche, **dadurch gekennzeichnet, dass** die Nabe (30) gegenüber dem Basisabschnitt (10) axial fixiert ist.

6. Brems- und Kupplungseinheit nach einem der vorstehenden Ansprüche, **gekennzeichnet durch** ein rotatives Lager (22a, 22b) zwischen der Nabe (30) und dem Basisabschnitt (10), wobei das Lager (22a, 22b) auf Seite der Nabe (30) und auf Seite des Basisabschnitts (10) axial fixiert ist.

7. Brems- und Kupplungseinheit nach einem der vorstehenden Ansprüche, **dadurch gekennzeichnet, dass** die Bremse wenigstens einen Bremsbelag (74) aufweist und/oder die Kupplung (40,60) mindestens einen Kupplungsbelag aufweist.

8. Brems- und Kupplungseinheit nach einem der vorstehenden Ansprüche, **dadurch gekennzeichnet, dass** die Reibscheiben oder Lamellen (40, 60) der Kupplung (40, 60) oder der Bremse aus nichtrostendem Stahl bestehen oder zumindest im Bereich von Reibflächen Abschnitte aus nichtrostendem Stahl aufweisen.

9. Brems- und Kupplungseinheit nach einem der vorstehenden Ansprüche, **dadurch gekennzeichnet, dass** ein umlaufender Spaltbereich (54, 76) zwischen Antriebsabschnitt (50) und Ankerscheibe (70), zwischen Ankerscheibe (70) und Basisabschnitt (10) und/oder zwischen Antriebsabschnitt (50) und Basisabschnitt (10) durch Dichtelemente (82) und/oder Dichtgeometrien (56, 78, 24) vor dem Eindringen von Verschmutzung und Feuchtigkeit geschützt ist.

10. Brems- und Kupplungseinheit nach Anspruch 9, **dadurch gekennzeichnet, dass** die Dichtgeometrie (56, 78) eine umlaufende in axialer Richtung offene Nut (78) an der Anhusscheibe (70) und einen in die Nut eingreifenden, umlaufenden Steg (56) an dem Antrichsabschnitt (50) umfasst.

11. Brems- und Kupplungseinheit nach Anspruch 9 oder 10, **dadurch gekennzeichnet, dass** die Dichtgeometrie (56,78) einen umlaufenden sich axial erstreckenden Dichtkragen (24) and dem Basisabschnitt (10) umfasst, der eine Umfangsfläche der Ankerscheibe (70) zumindest teilweise abdeckt, wobei zwischen der Umfangsfläche und dem Dichtkragen (24) ein umlaufendes Dichtelement (82)vorgesehen ist.

12. Brems- und Kupplungseinheit nach einem der vorstehenden Ansprüche, **dadurch gekennzeichnet, dass** die Bremse und die schaltbare Kupplung (40, 60) über ein gemeinsames Aktivierungsmittel (12) schaltbar sind, wobei das Aktivierungsmittel (12) eine elektromagnetisch wirkende Spule (12) umfasst.

13. Brems- und Kupplungseinheit nach Anspruch 12, **dadurch gekennzeichnet, dass** das Aktivierungsmittel (12) derart ausgestaltet ist, dass es in einem aktivierten Zustand eine Entkoppelung der Kupplung (40, 60) und eine Aktivierung der Bremse und in einem deaktivierten Zustand eine Koppelung der Kupplung (40, 60) und eine Lüftung der Bremse bewirkt.

14. Antriebsanordnung für eine Seilbahn mit einer Brems- und Kupplungseinheit (2) zur Montage an einer Hauptwelle (100), einem mit der Hauptwelle (100) drehfest verbundenen Tragrad (140), einem mit der Hauptwelle (100) drehfest verbindbaren Antriebsrad (160), einer Riemenscheibe (160), und einer mit der Hauptwelle (100) drehfest verbindbaren Nabe (30) und einem ortsfest befestigbaren Basisabschnitt (10), wobei zwischen dem Antriebsrad (160) und der Nabe (30) eine schaltbare Kupplung (40, 60) vorgesehen ist und zwischen dem Basisabschnitt (10) und der Nabe (30) eine schaltbare Bremse vorgesehen ist, **dadurch gekennzeichnet, dass** die schaltbare Kupplung (40, 60) als Reibkupplung (40, 60), als Lamellenkupplung (40, 60), mit Lamellen (40, 60) aus rostfreiem Stahl, ausgebildet ist.

15. Antriebsanordnung für eine Seilbahn nach Anspruch 14, **gekennzeichnet durch** eine Reibbremse, wobei die Reibkupplung (40, 60) und die Reibbremse als gemeinsame Brems- und Kupplungseinheit (2) nach einem der Ansprüche 1 bis 14 vorgesehen sind.

16. Antriebsanordnung nach einem der Ansprüche 14 oder 15, **dadurch gekennzeichnet, dass** das Antriebsrad (160) unmittelbar mit dem Antriebsabschnitt (50) der Brems- und Kupplungseinheit (2) drehtest verbunden ist.

## Claims

1. A brake- and clutch unit (2) for mounting on a main shaft (100) of a drive arrangement of a cableway, with a drive section (50) which is able to be acted upon by a drive torque, a hub (30) which is able to be connected in a torque-proof manner with the main shaft (100), and a base section (10) which is able to be fastened in a positionally fixed manner, wherein a switchable clutch (40, 60) is provided between the drive section (50) and the hub (30), and a switchable brake is provided between the base section (10) and the hub (30), **characterized in that** the switchable clutch (40, 60) is constructed as a friction clutch (40, 60).

2. The brake- and clutch unit according to Claim 1, **characterized in that** the hub (30) is constructed in one piece.

3. The brake- and clutch unit according to one of the preceding claims, **characterized by** an armature plate (70) which is movable axially with respect to the drive section (50) and the hub (30), which in a first axial end position causes a frictional engagement of the brake and in a second axial end position causes a frictional engagement of the switchable clutch (40, 60).

4. The brake- and clutch unit according to one of the preceding claims, **characterized in that** the switchable clutch (40, 60) is constructed as a multi-disc clutch (40, 60), wherein the outer discs (60) are connected in a torque-proof manner with the drive section (50) and the inner discs (40) are connected in a torque-proof manner with the hub (30), and wherein an actuating section (72) of the armature plate (70) is constructed as an actuating means of the multi-disc clutch (40, 60) for the application of an axially-acting actuating force onto the discs (40, 60).

5. The brake- and clutch unit according to one of the preceding claims, **characterized in that** the hub (30) is fixed axially with respect to the basic section (10).

6. The brake- and clutch unit according to one of the preceding claims, **characterized by** a rotary bearing (22a, 22b) between the hub (30) and the base section (10), wherein the bearing (22a, 22b) is fixed axially on the hub (30) side and on the base section (10) side.

7. The brake- and clutch unit according to one of the preceding claims, **characterized in that** the brake has at least one brake lining (74) and/or the clutch (40, 60) has at least one clutch lining.

8. The brake- and clutch unit according to one of the preceding claims, **characterized in that** the friction plates or discs (40, 60) of the clutch (40, 60) or of the brake consist of stainless steel or have sections of stainless steel at least in the region of friction surfaces.

9. The brake- and clutch unit according to one of the preceding claims, **characterized in that** a circumferential gap region (54, 76) between the drive section (50) and the armature plate (70), between the armature plate (70) and base section (10) and/or between the drive section (50) and base section (10) is protected from the penetration of dirt and moisture by sealing elements (82) and/or sealing geometries (56, 78, 24).

10. The brake- and clutch unit according to Claim 9, **characterized in that** the sealing geometry (56, 78) comprises a circumferential groove (78), which is open in axial direction, on the armature plate (70) and a circumferential web (56), engaging into the groove, on the drive section (50).

11. The brake- and clutch unit according to Claim 9 or 10, **characterized in that** the sealing geometry (56, 78) comprises a circumferential, axially-extending sealing collar (24) on the base section (10), which at least partially covers a circumferential surface of the armature plate (70), wherein a circumferential sealing element (82) is provided between the circumferential surface and the sealing collar (24).

12. The brake- and clutch unit according to one of the preceding claims, **characterized in that** the brake and the switchable clutch (40, 60) are switchable via a common activating means (12), wherein the activating means (12) comprises an electromagnetically-acting coil (12).

13. The brake- and clutch unit according to Claim 12, **characterized in that** the activating means (12) is configured such that in an activated state it brings about an uncoupling of the clutch (40, 60) and an activation of the brake, and in a deactivated state brings about a coupling of the clutch (40, 60) and a release of the brake.

14. A drive arrangement for a cableway with a brake- and clutch unit (2) for mounting on a main shaft (100), a carrying wheel (140) connected in a torque-proof manner with the main shaft (100), a drive wheel (160) connectable in a torque-proof manner with the main shaft (100), a belt pulley (160), and a hub (30) connectable in a torque-proof manner with the main shaft (100), and a base section (10) which is able to be fastened in a positionally fixed manner, wherein a switchable clutch (40, 60) is provided between the drive wheel (160) and the hub (30), and a switchable brake is provided between the base section (10) and the hub (30), **characterized in that** the switchable clutch (40, 60) is constructed as a friction clutch (40, 60), as a multi-disc clutch (40, 60), with discs (40, 60) of stainless steel.

15. The drive arrangement for a cableway according to Claim 14, **characterized by** a friction brake, wherein the friction clutch (40, 60) and the friction brake are provided as a common brake- and clutch unit (2) according to one of Claims 1 to 14.

16. The drive arrangement according to one of Claims 14 or 15, **characterized in that** the drive wheel (160) is connected in a torque-proof manner directly with the drive section (50) of the brake- and clutch unit (2).

## Revendications

1. Unité de freinage et d'accouplement (2) pour le montage sur un arbre principal (100) d'un agencement d'entraînement d'un téléphérique comprenant un tronçon d'entraînement (50) pouvant être sollicité avec un couple d'entraînement, un moyeu (30) pouvant être relié de façon solidaire en rotation à l'arbre principal (100) et une partie de base (10) pouvant être fixée localement, un accouplement (40, 60) commutable étant prévu entre la partie d'entraînement (50) et le moyeu (30) et un frein commutable étant prévu entre la partie de base (10) et le moyeu (30), **caractérisée en ce que** l'accouplement (40, 60) commutable est conçu sous forme d'un accouplement à friction (40, 60).

2. Unité de freinage et d'accouplement selon la revendication 1, **caractérisée en ce que** le moyeu (30) est conçu d'un seul tenant.

3. Unité de freinage et d'accouplement selon l'une des revendications précédentes, **caractérisée par** un disque d'induit (70) mobile axialement par rapport à la partie d'entraînement (50) et le moyeu (30), lequel disque provoque une liaison à friction du frein dans une première position extrême axiale et une liaison à friction de l'accouplement (40, 60) commutable dans une seconde position extrême axiale.

4. Unité de freinage et d'accouplement selon l'une des revendications précédentes, **caractérisée en ce que** l'accouplement (40, 60) commutable est conçu sous forme d'accouplement à lamelles (40, 60), les lamelles extérieures (60) étant reliées de façon solidaire en rotation à la partie d'entraînement (50) et les lamelles intérieures (40) de façon solidaire en rotation au moyeu (30) et une partie d'actionnement (72) du disque d'induit (70) étant conçue comme moyen d'actionnement de l'accouplement à lamelles (40, 60) pour l'application d'une force d'actionnement agissant axialement sur les lamelles (40, 60).

5. Unité de freinage et d'accouplement selon l'une des revendications précédentes, **caractérisée en ce que** le moyeu (30) est fixé axialement par rapport à la partie de base (10).

6. Unité de freinage et d'accouplement selon l'une des revendications précédentes, **caractérisée par** un palier (22a, 22b) rotatif entre le moyeu (30) et la partie de base (10), le palier (22a, 22b) étant fixé axialement sur le côté du moyeu (30) et sur le côté de la partie de base (10).

7. Unité de freinage et d'accouplement selon l'une des revendications précédentes, **caractérisée en ce que** le frein présente au moins une garniture de frein (74) et/ou l'accouplement (40, 60) présente une garniture d'accouplement.

8. Unité de freinage et d'accouplement selon l'une des revendications précédentes, **caractérisée en ce que** les disques de frottement ou les lamelles (40, 60) de l'accouplement (40, 60) ou du frein sont en acier inoxydable ou présentent tout du moins dans la zone de surfaces de frottement des parties en acier inoxydable.

9. Unité de freinage et d'accouplement selon l'une des revendications précédentes, **caractérisée en ce qu'**une zone de fente (54, 76) périphérique entre la partie d'entraînement (50) et le disque d'induit (70), entre le disque d'induit (70) et la partie de base (10) et/ou entre la partie d'entraînement (50) et la partie de base (10) est protégée par des éléments d'étanchéité (82) et/ou des géométries d'étanchéité (56, 78, 24) contre la pénétration d'encrassement et d'humidité.

10. Unité de freinage et d'accouplement selon la revendication 9, **caractérisée en ce que** la géométrie d'étanchéité (56, 78) comprend une rainure (78) périphérique, ouverte dans le sens axial, sur le disque d'induit (70) et une nervure (56) périphérique, s'engageant dans la rainure, sur la partie d'entraînement (50).

11. Unité de freinage et d'accouplement selon la revendication 9 ou 10, **caractérisée en ce que** la géométrie d'étanchéité (56, 78) comprend une collerette d'étanchéité (24) périphérique, s'étendant axialement, sur la partie de base (10), qui recouvre au moins partiellement une surface périphérique du disque d'induit (70), un élément d'étanchéité (82) périphérique étant prévu entre la surface périphérique et la collerette d'étanchéité (24).

12. Unité de freinage et d'accouplement selon l'une des revendications précédentes, **caractérisée en ce que** le frein et l'embrayage (40, 60) commutable peuvent être commutés par un moyen d'activation (12) commun, le moyen d'activation (12) comprenant une bobine (12) agissant de façon électromagnétique.

13. Unité de freinage et d'accouplement selon la revendication 12, **caractérisée en ce que** le moyen d'activation (12) est conçu, de telle sorte qu'il entraîne dans un état activé une dissociation de l'accouplement (40, 60) et une activation du frein et dans un état désactivé un accouplement de l'accouplement (40, 60) et une aération du frein.

14. Dispositif d'entraînement pour un téléphérique comprenant une unité de freinage et d'accouplement (2) pour le montage sur un arbre principal (100), une roue porteuse (140) reliée de façon solidaire en rotation à l'arbre principal (100), une roue d'entraînement (160) pouvant être reliée de façon solidaire en rotation à l'arbre principal (100), une poulie de courroie (160), et un moyeu (30) pouvant être relié de façon solidaire en rotation à l'arbre principal (100) et une partie de base (10) pouvant être fixée localement, un accouplement (40, 60) commutable étant prévu entre la roue d'entraînement (160) et le moyeu (30) et un frein commutable étant prévu entre la partie de base (10) et le moyeu (30), **caractérisé en ce que** l'accouplement (40, 60) commutable est conçu sous forme d'accouplement à friction (40, 60), sous forme d'accouplement à lamelles (40, 60), avec des lamelles (40, 60) en acier inoxydable.

15. Agencement d'entraînement pour un téléphérique selon la revendication 14, **caractérisé par** un frein à friction, l'accouplement à friction (40, 60) et le frein à friction étant prévus comme unité commune de freinage et d'accouplement (2) selon l'une des revendications 1 à 14.

16. Agencement d'entraînement selon l'une des revendications 14 ou 15, **caractérisé en ce que** la roue d'entraînement (160) est reliée de façon solidaire en rotation directement à la partie d'entraînement (50) de l'unité de freinage et d'accouplement (2).
